# FASCICULE DE BREVET EUROPEEN

(11) **EP 0 930 685 B1**
(45) Date de publication et mention de la délivrance du brevet: **09.07.2003**
(21) Numéro de dépôt: 99420014.5
(22) Date de dépôt: 19.01.1999
(51) Int. Cl.: H02G 3/06

(54) **Ensemble de changement de direction pour chemin de câbles ou analogue**
Richtungsänderungsvorrichtung für für Kabelrinnen oder dergleichen
Direction changing arrangement for cable raceway or similar

(30) Priorité: 20.01.1998 FR 9800748
(43) Date de publication de la demande: 21.07.1999
(73) Titulaire: Gewiss France SA, 21430 Liernais (FR)
(72) Inventeur: Simon, Bernard, 69300 Caluire (FR)
(74) Mandataire: Myon, Gérard Jean-Pierre

(56) Documents cités:
- DE-A- 2 930 083
- FR-A- 2 727 186
- US-A- 3 137 468

## Description

L'invention a trait à un ensemble de changement de direction pour chemin de câbles ou analogue.

Des exemples d'un tel ensemble peuvent être trouvés entre autres dans FR-A-2 727 186 et US-A-3 137 468.

Un chemin de câbles est classiquement installé dans un local industriel pour supporter des éléments de raccordement électrique tels que des câbles. Un tel chemin de câbles doit suivre un trajet imposé en fonction des nécessités techniques et de la configuration du bâtiment et/ou des machines qu'il contient. Lorsqu'un chemin de câbles doit changer de direction, il arrive que l'on dispose deux éléments rectilignes à proximité l'un de l'autre, les câbles étant laissés dans le vide au niveau du changement de direction. Ceci n'est pas acceptable sur le plan de la sécurité. On utilise parfois des coudes formés de deux cornières latérales et d'un fond et destinés à être raccordés aux éléments rectilignes d'un chemin de câbles.

Or, en fonction du nombre et de la section de câbles qu'ils doivent contenir, les chemins de câbles ont des largeurs différentes. En pratique, des largeurs comprises entre 65 mm et 600 mm sont utilisées dans l'industrie avec un pas de l'ordre de 30 mm. En conséquence, il est nécessaire de prévoir un grand nombre de coudes correspondant à chacune de ces largeurs, ce qui implique, pour le fabricant et les utilisateurs de ce genre de matériel, de gérer un grand nombre de références. Ceci s'avère peu pratique et d'un coût élevé.

En outre, lors de la mise en place d'un chemin de câbles sur site, l'installateur doit veiller à prévoir un nombre suffisant de coudes dans chaque dimension, afin de parer à toute éventualité, ce qui rend plus complexe son travail de préparation du chantier.

C'est à ces inconvénients qu'entend plus particulièrement remédier l'invention, en proposant un ensemble de changement de direction pour chemin de câbles ou analogue, dont la largeur est adaptée à celle des éléments rectilignes avec lesquels il coopère, y compris lorsque cette largeur varie.

Dans cet esprit, l'invention concerne un ensemble de changement de direction pour chemin de câbles ou analogue, cet ensemble comprenant un fond et deux éléments latéraux formant rebord pour le fond, caractérisé en ce que le fond comprend au moins une partie sécable permettant d'ajuster sa dimension selon une direction transversale, la partie sécable étant reliée à une partie principale du fond par une ligne de rupture.

Grâce à l'invention, la largeur du fond peut être adaptée à celle des éléments rectilignes avec lesquels il coopère pour former le chemin de câbles. En outre, la ligne de rupture est prévue à une cote correspondant aux largeurs habituelles des chemins de câbles, de sorte que l'utilisateur repère facilement à quel niveau il doit détacher la partie sécable de la partie principale du fond, en fonction de la largeur des éléments rectilignes du chemin de câbles. La ligne de rupture a donc une double fonction de séparation de la partie sécable et de repérage de la largeur en fonction des cotes habituelles des chemins de câbles.

Selon un aspect avantageux de l'invention, la partie sécable constitue la bordure extérieure du fond. Cet aspect de l'invention permet d'utiliser un même élément latéral pour constituer le bord intérieur du fond, quelle que soit la largeur choisie pour celui-ci.

Selon un autre aspect avantageux de l'invention, la partie sécable a une forme globale en secteur d'anneau. Cette forme est particulièrement adaptée à un fond en forme de secteur de disque, éventuellement tronqué, qui est d'un usage aisé.

Selon un autre aspect avantageux de l'invention, la ligne de rupture a la forme globale d'un arc de cercle. On peut avantageusement prévoir qu'elle est formée de segments de droite.

Selon un autre aspect avantageux de l'invention, la ligne de rupture est discontinue. Cet aspect de l'invention permet de laisser subsister, dans la ligne de rupture, des points d'attache résiduels de la partie sécable, ce qui contribue à une meilleure rigidité de cette partie lorsqu'elle doit être utilisée.

Selon un autre aspect avantageux de l'invention, le fond comprend des moyens d'assemblage avec des éléments latéraux, ces moyens étant actifs, que la partie sécable soit solidaire ou détachée du fond. En d'autres termes, les moyens d'assemblage sont prévus pour fonctionner quelle que soit la largeur choisie pour le fond.

Selon un autre aspect avantageux de l'invention, le fond porte des nervures de rigidification disposées selon une direction transversale. Ces nervures améliorent la résistance mécanique du fond.

Avantageusement, ces nervures sont disposées au niveau des bords latéraux du fond et s'étendent globalement au-dessus des bords en position d'utilisation de l'ensemble de l'invention. Ceci permet d'éloigner les bords latéraux du fond par rapport aux câbles qu'ils supportent et évite de râper ou de déchirer ces câbles au contact de ces bords.

On peut également prévoir que les nervures sont dépourvues de ligne de rupture, ce qui garantit leur rigidité.

L'invention sera mieux comprise et d'autres avantages de celle-ci apparaîtront plus clairement à la lumière de la description qui va suivre de deux modes de réalisation d'un ensemble de changement de direction pour chemin de câbles conforme à son principe, donnée uniquement à titre d'exemple et faite en référence aux dessins annexés dans lesquels :
- la figure 1 est une vue en perspective d'un ensemble de changement de direction conforme à l'invention ;
- la figure 2 est une vue de dessus de l'ensemble de la figure 1 ;
- la figure 3 est une vue analogue à la figure 2 pour le même ensemble adapté à un chemin de câbles de largeur inférieure ;
- la figure 4 est une vue analogue à la figure 2 pour le même ensemble adapté à un chemin de câbles de largeur supérieure ;
- la figure 5 est une vue en perspective du fond de l'ensemble des figures 1 et 2 lors d'une première étape de mise en place ;
- la figure 6 est une vue analogue à la figure 5, lors d'une seconde étape de mise en place ;
- la figure 7 est une vue analogue à la figure 5, lors d'une troisième étape de mise en place ;
- la figure 8 est une vue analogue à la figure 5, lors d'une quatrième étape de mise en place et
- la figure 9 est une vue en plan d'un fond conforme à un second mode de réalisation de l'invention.

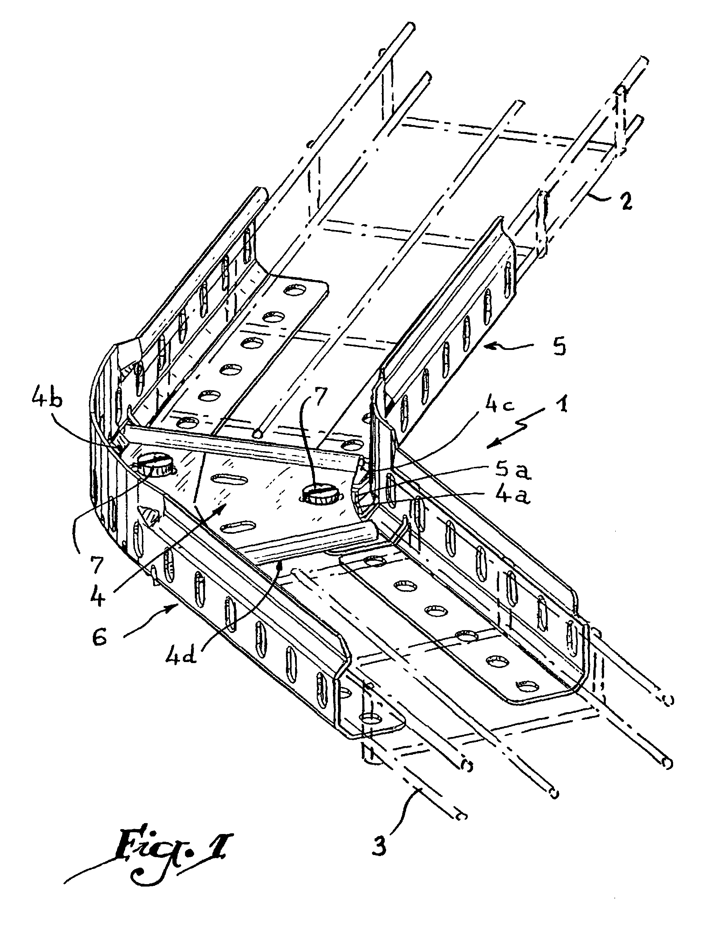

A la figure 1, un ensemble de changement de direction pour chemin de câbles 1 est destiné à coopérer avec des éléments rectilignes de chemin de câbles 2 et 3 représentés en traits mixtes. Cet ensemble comprend un fond 4 et deux éléments latéraux 5 et 6 en forme de cornière. Les éléments 5 et 6 sont cintrés dans leur partie centrale, de façon à effectuer un changement de direction de l'ordre de 45°. Le fond 4 est en forme de secteur angulaire tronqué délimité par un bord intérieur 4a, un bord extérieur 4b et deux bords latéraux 4c et 4d.

Comme il ressort de la comparaison des figures 2 à 4, le fond 4 peut être utilisé dans trois largeurs selon une direction transversale ou radiale représentée par le rayon R aux figures 2 à 4. Pour ce faire, il comprend deux parties sécables 41 et 42 qui peuvent être détachées d'une partie centrale 43. Une première ligne de rupture 44 est définie entre la partie sécable 42 et la partie centrale 43 alors qu'une seconde ligne de rupture 45 est définie entre les deux parties sécables 41 et 42.

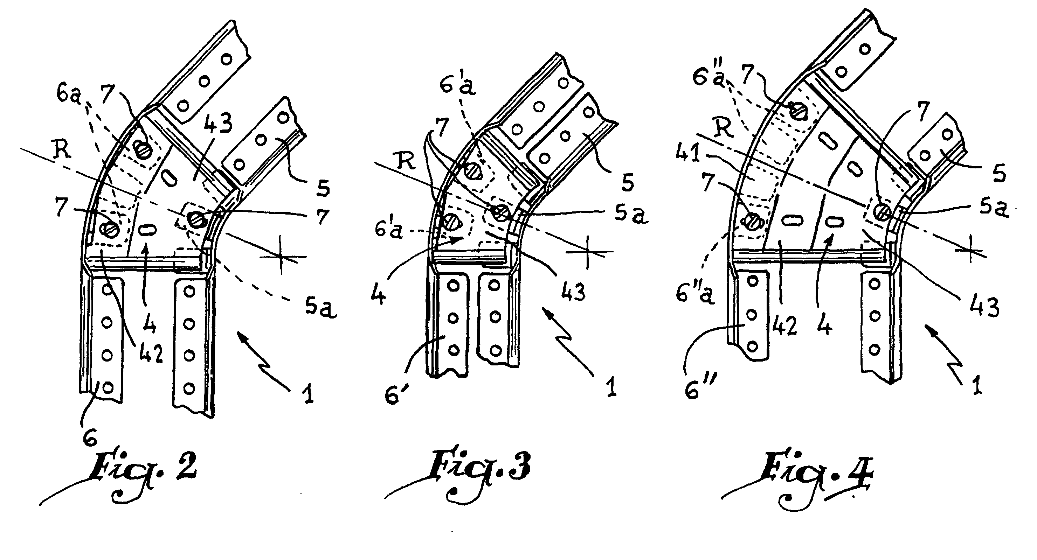

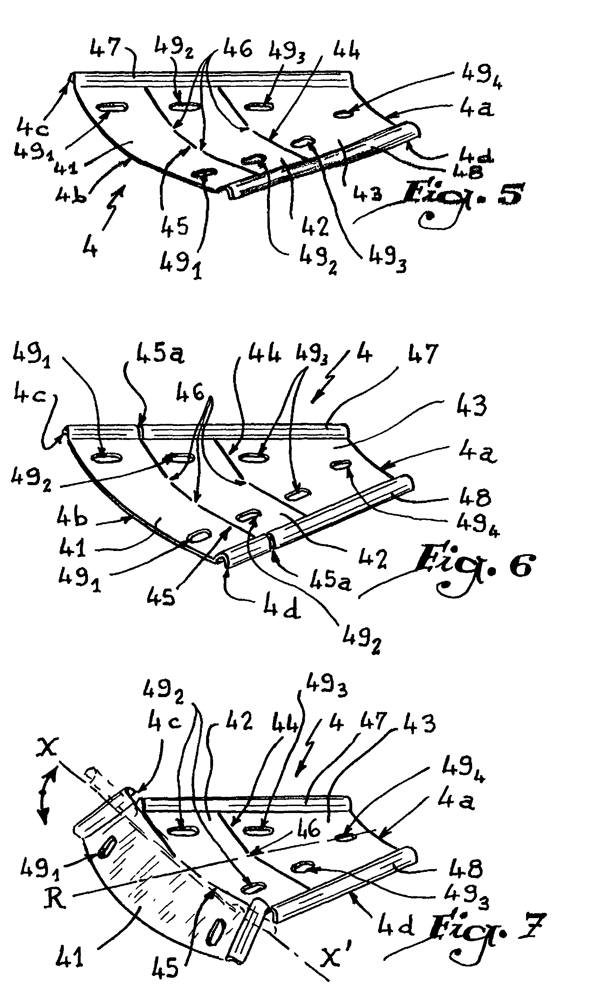

Dans la configuration de la figure 4, le fond 4 est utilisé dans son intégralité. Dans la position de la figure 2, la partie sécable 41 a été détachée du fond 4. Dans la position de la figure 3, les parties sécables 41 et 42 ont été détachées du fond 4. On comprend que, compte tenu de ces alternatives, la longueur du bord extérieur 4b du fond 4 dans les trois configurations représentées aux figures 2 à 4 est différente, de sorte que l'élément latéral extérieur 6 et 6' et 6" respectivement utilisé dans ces trois configurations est différent.

On note que les parties sécables 41 et 42 constituent respectivement les bordures extérieures du fond 4 dans les positions des figures 4 et 2. Ces parties sécables ont globalement une forme de secteur d'anneau, ce qui correspond au fait qu'il s'agit de bordures d'un secteur angulaire.

Compte tenu de ce qui précède, les lignes de rupture 44 et 45 ont une forme globale en arc de cercle. Pour des commodités de mise en forme et d'utilisation, les lignes de rupture 44 et 45 sont formées de segments de droite. Plus précisément, la ligne de rupture 44 est formée de deux segments de droite alors que la ligne de rupture 45 est formée de trois segments de droite.

Ces lignes de rupture 44 et 45 sont discontinues, de sorte qu'elles laissent subsister des points d'attache 46 dont la solidité contribue à la rigidité de l'ensemble du fond 4.

Au niveau des bords latéraux 4c et 4d, le fond 4 est pourvu de deux nervures 47 et 48 de forme bombée dont la concavité est tournée vers le bas dans la position de l'utilisation représentée à la figure 5. On note que les lignes de rupture 44 et 45 ne se prolongent pas au niveau des nervures 47 et 48, ce qui permet de conserver à ces nervures toute leur rigidité.

Des orifices 49 de passage de boulons de fixation 7, visibles aux figures 1 à 4, sont également prévus dans le fond 4. On note qu'une première paire d'orifices 49₁ est prévue dans la partie sécable 41 alors qu'une seconde paire d'orifices 49₂ est prévue dans la partie sécable 42 et qu'une troisième paire d'orifices 49₃ est prévue dans la partie centrale 43 du fond 4. Ainsi, il est possible d'insérer deux boulons 7 dans des orifices de pattes 6a, 6'a ou 6"a des éléments latéraux 6, 6' ou 6" et dans une paire d'orifices 49, quelle que soit la configuration choisie pour le fond 4.

Le fond 4 porte également, dans sa partie centrale 43, un orifice 49₄ destiné à recevoir un boulon 7 qui coopère avec une patte 5a de l'élément latéral intérieur 5.

En détachant la partie sécable 41 ou les parties sécables 41 et 42 de la partie centrale 43 du fond 4, il est possible d'ajuster la dimension de celui-ci selon la direction radiale du rayon R qui est une dimension transversale par rapport à la direction des câbles dans le chemin de câbles.

La préparation du fond 4 pour atteindre la conformation des figures 1 et 2 va maintenant être expliquée en référence aux figures 5 à 8.

Dans la position de la figure 5, le fond 4 est tel qu'il est stocké par l'utilisateur jusque sur le site de pose.

Lorsque l'utilisateur a déterminé que les éléments rectilignes 2 et 3 ont une largeur telle qu'il faut détacher la partie sécable 41 du reste du fond 4, il procède au sciage des nervures 47 et 48 dans le prolongement de la ligne de rupture 45. On est alors dans la position de la figure 6 dans laquelle le sciage des renforts apparaît avec la référence 45a.

On note que l'utilisateur n'a pas à hésiter sur la position exacte des sciages qu'il doit réaliser, dans la mesure où la ligne de rupture 45, qui est facilement repérable, indique à quel niveau des nervures ou renforts 47 ou 48 doivent être effectués ces sciages. En d'autres termes, comme les dimensions des éléments rectilignes 2 et 3 sont standardisés, les dimensions des parties 41 à 43 du fond 4 peuvent être également standardisées, ce qui facilite le repérage des opérations à réaliser sur les nervures 47 et 48.

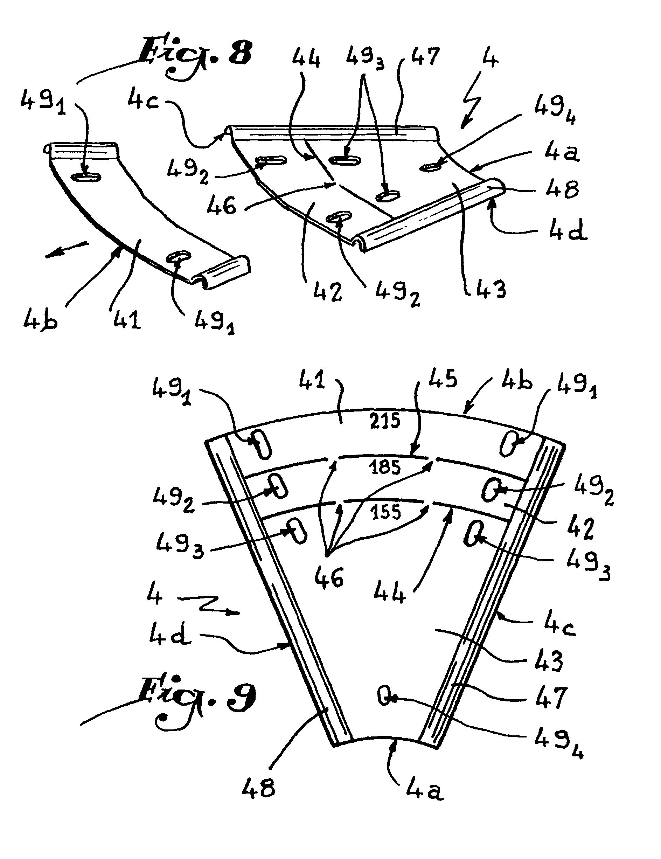

Lorsque cette opération de sciage est réalisée, l'opérateur plie le fond 4 le long de la ligne de rupture 45 à la manière représentée en traits pleins et pointillés à la figure 7. L'opérateur peut réaliser plusieurs mouvements d'oscillation autour d'un axe XX' appartenant au plan du fond 4, afin de faciliter sa rupture au niveau de la ligne 45. Après quelques oscillations, l'écrouissage du fond 4 est suffisant et il est possible de détacher la partie sécable 41 du reste de fond 4 constitué par les parties 42 et 43. On est alors dans la position de la figure 8 où la partie sécable 41 est évacuée dans le sens de la flèche F. Cette partie 41 peut alors être jetée car elle n'est pas utile pour la suite des opérations de montage.

Les points d'attache 46 ne sont pas d'une largeur suffisante pour empêcher l'opérateur de séparer la partie 41 des autres parties.

Pour la suite, les éléments 5 et 6 sont boulonnés sur le fond 4, grâce aux orifices 49₂ et 49₄ et aux boulons 7. On est alors dans la configuration de la figure 2 où il est possible de raccorder les éléments rectilignes 2 et 3 sur l'ensemble de changement de direction, comme représenté à la figure 1.

Dans le second mode réalisation de l'invention, représenté à la figure 9, les éléments analogues à ceux du mode de réalisation précédente portent des références identiques. Ce mode de réalisation diffère du précédent essentiellement en ce que les lignes de rupture 44 et 45 ne sont pas formées de segments de droite, mais d'arcs de cercle.

Une autre différence provient du fait que des indications de dimensions nominales de la largeur du chemin de câbles sont portées à proximité des lignes de rupture 44 et 45. Ces indications ont pour fonction de faciliter le repérage des parties sécables à évacuer lors de la mise en place d'un élément de changement de direction. Ainsi, l'opérateur peut-il préparer l'ensemble de changement de direction 1 dès qu'il connaît la largeur nominale des éléments rectilignes 2 et 3.

Comme les nervures 47 et 48 sont disposées globalement au-dessus des bords 4c et 4d du fond 4, elles peuvent supporter des câbles à distance de ces bords, de sorte que les câbles ne risquent pas d'être endommagés par frottement sur ces bords lorsqu'ils sont tirés dans les chemins de câbles pour leur mise en place. Les nervures 47 et 48 permettent donc de réduire sensiblement les risques de détérioration des gaines et câbles présents dans le chemin de câbles.

L'invention a été représentée avec un fond en forme de secteur angulaire, dont l'angle au sommet est d'environ 45°. Lorsqu'il est nécessaire d'effectuer un changement de direction à angle droit, il est possible de juxtaposer deux fonds du type décrit pour former un angle d'environ 90°. Dans ce cas, une nervure 47 ou 48 d'un des fonds vient en recouvrement d'une nervure du fond adjacent. Les éléments latéraux 5 et 6 sont adaptés.

L'ensemble de changement de direction de l'invention peut être réalisé en métal ou en matière plastique au choix du fabricant ou de l'utilisateur. En règle générale, le matériau constitutif de l'ensemble 1 sera choisi en fonction de celui des éléments rectilignes 2 et 3.

L'invention a été décrite en référence à des chemins de câbles, mais l'ensemble de changement de direction de l'invention est applicable à d'autres matériels tels que des goulottes, des gaines, etc...

## Revendications

1. Ensemble (1) de changement de direction pour chemin de câbles (2, 3) ou analogue, ledit ensemble comprenant un fond (4) et deux éléments latéraux (5, 6) formant rebords pour ledit fond, **caractérisé en ce que** ledit fond comprend au moins une partie sécable (41, 42) permettant d'ajuster la dimension dudit fond selon une direction transversale (R), ladite partie sécable étant reliée à une partie principale (43) dudit fond par une ligne de rupture (44, 45).

2. Ensemble selon la revendication 1, **caractérisé en ce que** ladite partie sécable (41, 42) constitue la bordure extérieure dudit fond (4).

3. Ensemble selon la revendication 1 ou 2, **caractérisé en ce que** ladite partie sécable (41, 42) a une forme globale en secteur d'anneau.

4. Ensemble selon l'une des revendications précédentes, **caractérisé en ce que** ladite ligne de rupture (44, 45) a la forme globale d'un arc de cercle.

5. Ensemble selon l'une des revendications précédentes, **caractérisé en ce que** ladite ligne de rupture (44, 45) est formée de segments de droite.

6. Ensemble selon l'une des revendications précédentes, **caractérisé en ce que** ladite ligne de rupture (44, 45) est discontinue.

7. Ensemble selon l'une des revendications précédentes, **caractérisé en ce que** ledit fond (4) comprend des moyens (7, 49) d'assemblage avec lesdits éléments latéraux (5, 6), lesdits moyens d'assemblage étant actifs lorsque ladite partie sécable (41, 42) est solidaire dudit fond et lorsque ladite partie sécable est détachée dudit fond.

8. Ensemble selon l'une des revendications précédentes, **caractérisé en ce que** ledit fond (4) porte des nervures (47, 48) de rigidification disposées selon une direction transversale (R).

9. Ensemble selon la revendication 8, **caractérisé en ce que** lesdites nervures de rigidification (47, 48) sont disposées au niveau des bords latéraux (4c, 4d) dudit fond (4) et s'étendent globalement au-dessus desdits bords en position d'utilisation dudit ensemble.

10. Ensemble selon la revendication 8 ou 9, **caractérisé en ce que** lesdites nervures (47, 48) sont dépourvues de ligne de rupture.

## Patentansprüche

1. Anordnung (1) zur Richtungsänderung für Kabelwege (2, 3) oder dergleichen, wobei die Anordnung einen Boden (4) und zwei Seitenelemente (5, 6) aufweist, die Randleisten für den Boden bilden, **dadurch gekennzeichnet,**
**dass** der Boden mindestens einen trennbaren Bereich (41, 42) umfasst, der eine Einstellung der Abmessung des Bodens entsprechend einer Querrichtung (R) ermöglicht, wobei der trennbare Bereich mit einem Hauptteil (43) des Bodens durch eine Bruchlinie (44, 45) verbunden ist.

2. Anordnung nach Anspruch 1, **dadurch gekennzeichnet, dass** der trennbare Bereich (41, 42) den Außenrand des Bodens (4) bildet.

3. Anordnung nach Anspruch 1 oder Anspruch 2, **dadurch gekennzeichnet, dass** der trennbare Bereich (41, 42) eine Form aufweist, die im Wesentlichen einem Ringsektor entspricht.

4. Anordnung nach einem der vorhergehenden Ansprüche, **dadurch gekennzeichnet, dass** die Bruchlinie (44, 45) eine Form aufweist, die im Wesentlichen einem Kreisbogen entspricht.

5. Anordnung nach einem der vorhergehenden Ansprüche, **dadurch gekennzeichnet, dass** die Bruchlinie (44, 45) aus Geradensegmenten gebildet wird.

6. Anordnung nach einem der vorhergehenden Ansprüche, **dadurch gekennzeichnet, dass** die Bruchlinie (44, 45) diskontinuierlich ist.

7. Anordnung nach einem der vorhergehenden Ansprüche, **dadurch gekennzeichnet, dass** der Boden (4) Mittel (7, 49) zum Zusammenfügen mit den Seitenelementen (5, 6) umfasst, wobei die Mittel zum Zusammenfügen aktiv sind, wenn der trennbare Bereich (41, 42) fest mit dem Boden verbunden ist und wenn der trennbare Bereich vom Boden losgelöst ist.

8. Anordnung nach einem der vorhergehenden Ansprüche, **dadurch gekennzeichnet, dass** der Boden (4) Versteifungsrippen (47, 48) aufweist, die entsprechend einer Querrichtung (R) angeordnet sind.

9. Anordnung nach Anspruch 8, **dadurch gekennzeichnet, dass** die Versteifungsrippen (47, 48) an den Seitenrändern (4c, 4d) des Bodens (4) angeordnet sind und sich in der Benutzungsposition der Anordnung im Wesentlichen über den Rändern erstrecken.

10. Anordnung nach Anspruch 8 oder Anspruch 9, **dadurch gekennzeichnet, dass** die Rippen (47, 48) ohne Bruchlinien ausgebildet sind.

## Claims

1. Assembly for changing direction of a raceway for cables (2, 3) or the like, the said assembly comprising a base (4) and two lateral elements (5, 6) forming sides for the said base, **characterized in** said base comprises at least one separable part (41, 42) allowing adjustment of the dimension of said base along a transverse direction (R), the said separable part being connected to a principal part (43) of the said base by a line of weakness (44, 45).

2. Assembly according to claim 1, **characterized in that** the said separable part (41, 42) constitutes the exterior margin of the said base (4).

3. Assembly according to claim 1 or 2, **characterized in that** the said separable part (41, 42) has a general form of a sector of a ring.

4. Assembly according to any one of the foregoing claims, **characterized in that** the said line of weakness (44, 45) has the general form of a circular arc.

5. Assembly according to any one of the foregoing claims, **characterized in that** the said line of weakness (44, 45) is formed of straight-line segments.

6. Assembly according to any one of the foregoing claims, **characterized in that** the said line of weakness (44, 45) is discontinuous.

7. Assembly according to any one of the foregoing claims, **characterized in that** the said base (4) comprises means (7, 49) of assembly with the said lateral elements (5, 6), the said assembly means being operable when the said separable part (41, 42) is integral with the said base and when the said separable part is detached from the said base.

8. Assembly according to any one of the foregoing claims, **characterized in that** the said base (4) carries stiffening ribs disposed along a transverse direction (R).

9. Assembly according to claim 8, **characterized in that** the said stiffening ribs (47, 48) are disposed at the level of the lateral margins (4*c*, 4*d*) of the said base (4) and extend generally above the said margins in a condition of use of the said assembly.

10. Assembly according to claim 8 or 9, **characterized in that** the said ribs (47, 48) are without a line of weakness.
